# EUROPEAN PATENT SPECIFICATION

(11) **EP 3 616 511 B1**
(45) Date of publication and mention of the grant of the patent: **14.07.2021**
(21) Application number: 19194167.3
(22) Date of filing: 28.08.2019
(51) Int. Cl.: A01M 21/04

(54) **A DEVICE AND METHOD FOR KILLING WEEDS BY APPLICATION OF A HIGH TEMPERATURE FLUID**
VORRICHTUNG UND VERFAHREN ZUR UNKRAUTBEKÄMPFUNG DURCH ANWENDUNG EINER HOCHTEMPERATURFLÜSSIGKEIT
DISPOSITIF ET PROCÉDÉ POUR ÉLIMINER LES MAUVAISES HERBES PAR L'APPLICATION D'UN FLUIDE À HAUTE TEMPÉRATURE

(30) Priority: 29.08.2018 NL 2021513
(43) Date of publication of application: 04.03.2020
(73) Proprietor: Heatweed Technologies AS, 1859 Slitu (NO)
(72) Inventor: Van de Haar, Hendrik, 6733 JA Wekerom (NL); Van Hensbergen, Jan, 6714 GL Ede (NL)
(74) Representative: Bartelds, Erik

(56) References cited:
- WO-A1-98/32332
- WO-A1-2005/120225
- FR-A1- 2 356 366
- NL-C2- 1 009 183

## Description

The invention relates to a device for killing weeds by application of a high temperature fluid to the weeds, comprising an elongated applicator chamber having a plurality of fluid discharge openings. Such a weed killing device is known, e.g from WO 2005/120225 A1.

A conventional weed killing device includes an elongated applicator chamber, which may be a beam or a tube, and which is provided with an inlet for allowing the high temperature fluid to enter the applicator chamber. The applicator chamber is further provided with a series of fluid discharge openings which are directed at the weeds to be killed. The inlet is connected to a fluid supply tube or hose, which in turn is connected to a source of high temperature fluid. If the device is intended to serve as handheld device, the fluid supply tube may be incorporated in a shaft connecting the applicator chamber with a handle. If, on the other hand, the device is intended to be part of a rolling piece of equipment, either towed or self-propelled, it will be mounted in a frame and the fluid may be supplied through a hose. The source of high temperature fluid may be a reservoir or buffer that is filled with the fluid at the high temperature that is needed for killing weeds, or it may be a cold fluid supply line that runs through or along a heater to be heated to the required high temperature. The inlet of the applicator chamber is usually arranged more or less centrally along the length of the chamber, and is oriented substantially perpendicular to the longitudinal direction of the chamber. This means that the flow of high temperature fluid entering the chamber through the inlet must be deflected over nearly a right angle in order to be distributed in the longitudinal direction of the chamber. In a known weed killing device this is done by a deflector plate facing the inlet.

The conventional weed killing device has the drawback that it does not allow the high temperature fluid to be sufficiently uniformly distributed in the longitudinal direction of the applicator chamber. The fluid flow and fluid pressure vary from one discharge opening to the other, and as a result some openings will apply high temperature liquid, e.g. hot water, while others will apply high temperature vapour, e.g. steam. In particular, the fluid flowing from the discharge openings nearest to the inlet, which has taken the shortest route through the device and is therefore still relatively hot, will evaporate instantly upon exiting the respective opening. Moreover, the amount of fluid applied to the weeds is larger in the vicinity of the inlet than further out towards the ends of the device. This lack of uniformity has for its result that some weeds will be killed, while others may survive.

The above-identified prior art document WO 2005/120225 A1 discloses an apparatus producing superheated water and/or steam for weed killing. The apparatus has a diesel fired boiler which, via a pump, generates hot water at a pressure of 40-52 bar and temperature of 90-115° C. This passes down a tube and encounters a constriction provided by a nozzle. Passing through the nozzle into a depressurisation chamber, which is at atmospheric pressure, the water boils. When the super heated water exits ports of a distribution pipe it encounters ambient temperature and is transformed into high temperature water vapour and/or water droplets.

The invention has for its object to provide a device of the type above with which weeds can be killed more effectively and more efficiently. In accordance with the invention, this is achieved in that the device is provided with an elongated distributing member arranged in the applicator chamber, wherein the distributing member comprises at least one fluid inlet and a plurality of distribution openings in fluid communication with the applicator chamber. By making use of a dedicated distributing member that is arranged within the applicator chamber, the fluid may be distributed more evenly over the entire length of the chamber, so that fluid pressure and fluid temperature will be more or less equal at each point in the applicator chamber. This in turn allows the fluid to be evenly applied to the weeds, at a substantially constant temperature and in the same state. In other words, all discharge openings will simultaneously apply either liquid or vapour.

In one embodiment of the weed killing device according to the invention, the distribution openings are spaced apart in a longitudinal direction of the distributing member to ensure that the high temperature fluid is distributed over the length of the distributing member. In that case, it may be advantageous for the distribution openings to be substantially evenly spaced apart in the longitudinal direction. On the other hand, the spacing of the distribution openings may also be determined on the basis of predicted pressure losses along the length of the distributing member, in which case the openings will probably be relatively closer near the outer ends of the distributing member.

In order to achieve a uniform flow out of the distributing member into the applicator chamber, the distribution openings may be substantially aligned.

In a further embodiment of the weed killing device according to the invention, the fluid discharge openings define a first fluid flow direction and the distribution openings define a second fluid flow direction which is oriented at an angle to the first fluid flow direction. In this way the flow direction of the fluid is changed between the distribution openings and the discharge openings, thus creating the possibility of mixing the fluid to achieve a more uniform flow out of the discharge openings. In that case, it may be advantageous for the second fluid flow direction to be substantially opposite to the first fluid flow direction, thus forcing a relatively large change of direction between the two sets of openings.

In an embodiment of the weed killing device according to the invention, the fluid discharge openings are spaced apart in a longitudinal direction of the applicator chamber, again in the interest of obtaining a uniform flow of high temperature fluid onto the weeds. Here again, the fluid discharge openings may be substantially evenly spaced apart in the longitudinal direction, but a different spacing, e.g. on the basis of the predicted pressure losses within the applicator chamber is also conceivable.

In order to achieve an even distribution of the fluid over the weeds to be killed, the fluid discharge openings may be substantially aligned.

In order to achieve uniform and symmetrical fluid flow, it is advantageous for the longitudinal direction of the distributing member and the longitudinal direction of the applicator chamber to be substantially parallel. In that case, the distributing member may extend over substantially the entire length of the applicator chamber, so that the fluid is actively distributed over the entire length of the device.

Moreover, it may be advantageous for the distribution openings to be spaced further apart than the fluid discharge openings. For instance, the spacing of adjacent distribution openings may be between 25-80 mm, and preferably between 40-50 mm, while the spacing of adjacent fluid discharge openings may for instance be between 5-20 mm, and preferably between 5-15 mm.

Again with a view to achieving an optimum distribution of high temperature fluid over the length of the applicator chamber and optimum control over the temperature and pressure of the fluid, the distribution openings and the fluid discharge openings may have substantially the same size. For instance, the distribution openings may have a diameter of between 1.0-3.0 mm, preferably between 1.5-2.5 mm and more preferably approximately 2 mm. The fluid discharge openings on the other hand, may have a diameter of between 1.0-2.5 mm, preferably between 1.5-2.0 mm. Due to their wider spacing the number of distribution openings is relatively smaller, so that the total surface area of the distributing openings is less than the total surface area of the fluid discharge openings. In this way the pressure within the distributing member and the pressure within the applicator chamber can be controlled within relatively narrow ranges.

In order to allow the high temperature fluid to flow freely from the distribution openings to the fluid discharge openings, it is advantageous for the distributing member to have an outer surface which is spaced apart from an inner wall of the applicator chamber.

The flow of high temperature fluid through the applicator chamber towards the discharge openings is further smoothed if the distributing member has a smooth cross-sectional shape. In one embodiment of the weed killing device according to the invention, the distributing member is tubular and has a substantially circular cross-section.

The invention also relates to a method for killing weeds by application of a high temperature fluid to the weeds. A known method of this type comprises the steps of supplying the high temperature fluid to at least one inlet of an elongated applicator chamber; distributing the high temperature fluid in a longitudinal direction of the applicator chamber; and applying the high temperature fluid to the weeds through a plurality of fluid discharge openings. This known method, which is performed using the known device described above, has the same drawbacks as the prior art weed killing device.

In order to overcome or at least alleviate these problems the invention provides a method for killing weeds by application of a high temperature fluid to the weeds, comprising the steps of:
- supplying the high temperature fluid to at least one inlet of an elongated distributing member;
- distributing the high temperature fluid in a longitudinal direction of the distributing member;
- transferring the high temperature fluid to an elongated applicator chamber through a plurality of distribution openings; and
- applying the high temperature fluid to the weeds through a plurality of fluid discharge openings. The fluid may be supplied at a temperature of 80-120 °C, preferably at a temperature of 98-110 °C and more preferably at a temperature of 98-102 °C.

In order to obtain a uniform distribution of fluid pressure and fluid temperature throughout the applicator chamber, a flow direction of the high temperature fluid may be changed between the step of transferring the high temperature fluid and the step of applying the high temperature fluid. In an embodiment of the claimed method, the flow direction of the high temperature fluid is substantially reversed between the step of transferring the high temperature fluid and the step of applying the high temperature fluid.

In a further embodiment of the method, between the step of transferring and the step of applying, the high temperature fluid exiting the distribution openings may flow around the distributing member to the fluid discharge openings. By forcing the fluid to follow a relatively long and circuitous flow path to arrive at the discharge openings, mixing is promoted and fluid pressure and fluid temperature are kept substantially constant throughout the applicator chamber.

The flow direction of the high temperature fluid may be oriented at an angle to the longitudinal direction of the distributing member. If the distribution openings would all be aligned with the fluid discharge openings, the fluid flow might be perpendicular to the longitudinal axis of the distributing member and applicator chamber. But when the distribution openings are not aligned with the fluid discharge openings, there will be a component of crossflow between the two sets of openings, which results in improved mixing and a more uniform distribution of fluid temperature and fluid pressure over the length of the applicator chamber.

The invention will now be illustrated by reference to the enclosed drawings, in which:
Fig. 1 is a general lay out of a system for killing weeds by application of high temperature fluid;
Fig. 2 is a perspective view of a handheld device for killing weeds in accordance with an embodiment of the invention;
Fig. 3 is a longitudinal sectional view of the applicator chamber and distributing member of the weed killing device along the line III-III in Fig. 2;
Fig. 4 is a cross-sectional view of the applicator chamber and distributing member along the line IV-IV in Fig. 3;
Fig. 5 is a perspective view of the fluid flow around the distributing member, in which the applicator chamber is shown in phantom lines; and
Fig. 6 is a flow diagram showing the main steps of a method for killing weeds by application of high temperature fluid in accordance with an embodiment of the invention.

It should be noted that the figures in the drawings are not to scale and that some features may be out of proportion.

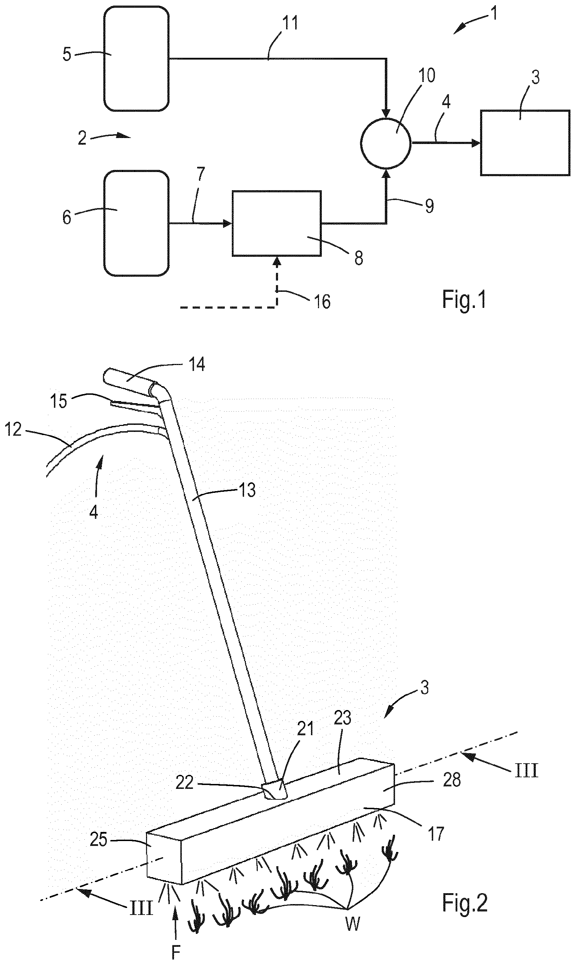

A system 1 for killing weeds W by application of a high temperature fluid F comprises a source 2 of high temperature fluid, a weed killing device 3 and a conduit 4 connecting the weed killing device 3 with the source 2 (Fig. 1). In the present embodiment the source 2 comprises a first reservoir or buffer 5 which is filled with high temperature fluid, e.g. hot water, as well as a second reservoir or buffer 6 which is filled with cold fluid, e.g. cold water. A line 7 connects the second buffer 6 with a heater 8, which may be any suitable type of heater, such as a burner, an electric heater, a microwave or an infrared radiator. Instead of a second buffer 6, the heater 7 may also be connected with a water mains 16 (indicated in phantom lines). A line 9 connects the heater 8 to a switching valve 10. The first buffer 5 is connected with the switching valve 10 by a line 11. The switching valve 10 connects either the first buffer 5 or the second buffer 6 and heater 8 with the conduit 4. The source 2 of high temperature fluid may be carried by a user of the system 1, or it may be mounted on e.g. a vehicle, which may be a towed vehicle or a self-propelled vehicle.

The source 2 supplies fluid to the weed killing device 3 at a temperature which may be in the range of 80-120 °C. In particular, the fluid is usually supplied at a temperature between 98 °C and 110 °C. In actual practice the supply temperature is in the narrow range of 98-102 °C. The weed killing device 3 is arranged to apply the high temperature fluid to the weeds at relatively low pressures of e.g. 0-2 bar over ambient pressure, i.e. substantially pressureless. The source 2 may be configured to supply the high temperature liquid at a flow rate between 3 and 40 l/min, depending on the dimensions of the system and its intended use. In actual practice the flow rate requirements may be in the range of 5 to 20 1/min.

In the present embodiment the conduit 4 comprises a flexible part or hose 12 and a rigid part or tube 13 (Fig. 2). This tube 13 forms part of a shaft which connects a handle 14 with the weed killing device 3. The handle 14 may include a movable control member 15, like e.g. a trigger.

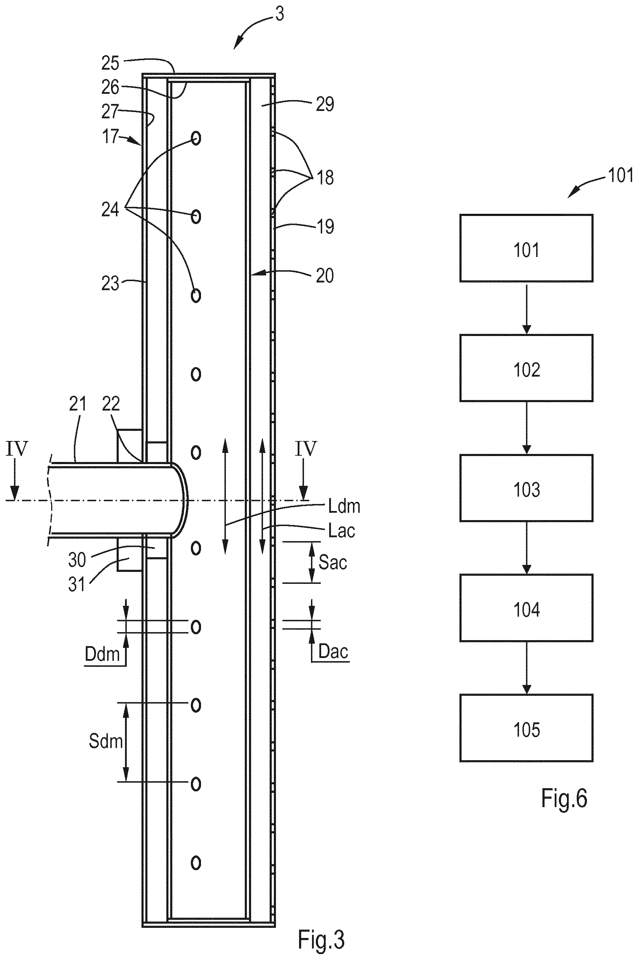

The weed killing device 3 comprises an elongated applicator chamber 17 which is closed on all sides but has a plurality of fluid discharge openings 18 arranged in its bottom wall 19 (Fig. 3). An elongated distributing member 20 is arranged within the applicator chamber 17. The distributing member 20, which is also closed on all sides, has an inlet 21 which extends through an opening 22 in a top wall 23 of the applicator chamber 17 and which is connected to the tube 13. The connection may be established in any desired way, e.g. by screwing a threaded connector over the inlet 21 or by means of a bayonet connector. A restriction (not shown) may be arranged either in the tube 13 or in the inlet 21. An outer end of the inlet 21 may be bent to allow a more ergonomic tilted position of the shaft and tube 13. The distributing member 20 further has a plurality of distribution openings 24 which are aligned in a row that extends in a longitudinal direction Ldm of the distributing member. The distribution openings 24 are spaced apart in the longitudinal direction Ldm. In the illustrated embodiment the distribution openings 24 are equidistant and have a spacing Sdm.

In the illustrated embodiment the fluid discharge openings 18 in the bottom wall 19 of the applicator chamber 17 are also aligned in a longitudinal direction Lac of the applicator chamber - which is shown to be parallel to the longitudinal direction Ldm of the distributing member 20. The fluid discharge openings 18 are spaced apart in the longitudinal direction Lac. In the illustrated embodiment the fluid discharge openings 18 are equidistant and have a spacing Sac. In this embodiment the spacing Sac of the fluid discharge openings 18 is smaller than the spacing Sdm of the distribution openings 24. Since the distributing member 20 is shown to extend from the inlet 21 to opposite sidewalls 25, i.e. over substantially the entire length of the applicator chamber 17, this means that the number of fluid discharge openings 18 is greater than the number of distribution openings 24. In this embodiment each fluid discharge opening 18 has a diameter Dac that is smaller than a diameter Ddm of each of the distribution openings 24, which compensates for the greater number of fluid discharge openings 18. The total surface area of the two sets of openings 17, 24 may be substantially equal, so that pressure fluctuations are prevented.

The spacing Sdm of the distributing openings 24 may vary between approximately 25 mm and 80 mm, depending on the intended use of the weed killing device 3. More in particular, the spacing Sdm may be between 40 mm and 50 mm. The spacing Sac of the fluid discharge openings 17 may be between 5 mm and 20 mm, more in particular between 5 mm and 15 mm. Again depending on the intended use, the distribution openings 24 may have a diameter Ddm of between 1.0 mm and 3.0 mm, more in particular between 1.5 mm and 2.5 mm. In the illustrated embodiment the diameter Ddm of the distribution openings 24 is approximately 2 mm. The fluid discharge openings 18 may have a diameter Dac of between 1.0 mm and 2.5 mm, more in particular between 1.5 mm and 2.0 mm. The diameters Ddm and Dac on one hand and the spacings Sdm and Sac on the other are selected such that specific pressures may be established inside the distributing member 20 and inside the applicator chamber 17. While the fluid may exit from the applicator chamber 17 almost pressureless, the pressure in the distributing member may be somewhat higher, in the range of 1-5 bar.

The number of distribution openings 24 and fluid discharge openings 18 obviously depends on the length of the distributing member 20 and the length of the applicator chamber 17, respectively. Depending on the intended use of the weed killing device 3 this length may vary between 20 cm and 100 cm or more. The cross-sectional dimensions of the applicator chamber 17 and distributing member 20 can be selected as a function of the fluid flow rate for which the device 3 is designed. In the illustrated embodiment the applicator chamber 17 has a square cross-section of 25 x 25 mm, while the distributing member 20 has a diameter of 15 mm, but these dimensions may vary within broad ranges.

Whereas the fluid discharge openings 18 are arranged in the bottom wall 19 of the applicator chamber 17, the distributing openings 24 are not arranged in the bottom of the distributing member 20, but rather near the top of that member. Consequently, fluid flowing into the distributing member 20 from the inlet 21 is not just deflected over a substantially right angle to spread out in the longitudinal direction Ldm, but is further deflected upwardly to reach the distributing openings 24. In this way two opposite swirling fluid flows are established in the distributing member 20, each directed at an end 26 thereof. These ends 26 are both closed off, so that the fluid can only exit the distributing member 20 through the distribution openings 24.

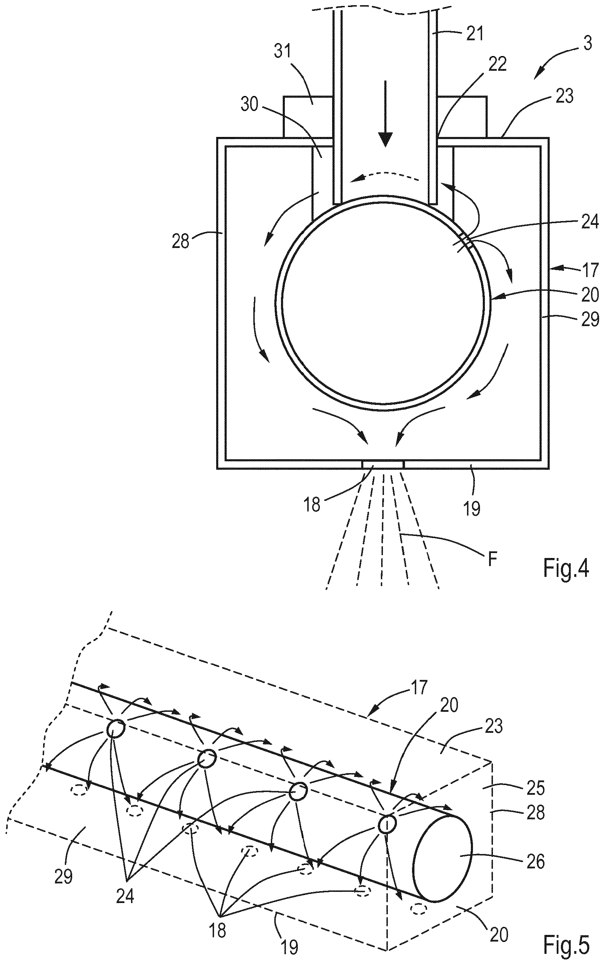

After leaving the distribution openings 24, the fluid flows into the applicator chamber 17. In this embodiment the applicator chamber 17 has a substantially square cross-sectional shape, and the distribution openings 24 are substantially directed at a corner 27 between the top wall 23 and a front wall 28 of the applicator chamber 17 (Fig. 4). As a result, a fluid flow direction which is defined by the distribution openings is mainly upward, and is almost opposite to a fluid flow direction which is defined by the fluid discharge openings 18 in the bottom wall 19 of the applicator chamber 17. The distributing member 20 is arranged in the applicator chamber 17 in such a way that its outer surface is spaced apart from all inner walls of the chamber. To this end a spacer 30 is arranged around a part of the inlet 21 inside the chamber. The distributing member 20 is fixed in the applicator chamber 17 by means of a nut 31 which is screwed onto a threaded outer segment of the inlet 21. Thus, the fluid flowing out of the distribution openings 24 can flow around the distributing member 20 in the direction of the fluid discharge openings 18. In order to facilitate such fluid flow, the distributing member 20 has a smooth cross-sectional shape, in this embodiment a circular shape, so that the distributing member 20 is a tube.

Since the spacing Sdm of the distribution openings 24 differs from that of the fluid discharge openings 18, the fluid flow will not be parallel to the inlet 21, but will necessarily have a component in the longitudinal direction Ldm, Lac. Therefore, the fluid flow in the applicator chamber 17 will spiral around the distributing member 20 in opposite directions (Fig. 5), thus leading to intimate mixing of all parts of the fluid, so that a uniform fluid temperate and fluid pressure are established throughout the applicator chamber 17. This in turn leads to a uniform fluid flow out of all fluid discharge openings 18, so that all the weeds W will be subject to treatment with fluid at the same temperature and the same pressure, and in the same state - liquid or vapour. In this way the weeds W can be effectively and efficiently killed.

The weed killing device 3 described above allows the user to perform a method for killing weeds by application of a high temperature fluid to the weeds, which method 100 comprises the following steps. In a first step 101 (Fig. 6) the high temperature fluid F is supplied to at the inlet 21 of the elongated distributing member 20. In a subsequent step 102 the high temperature fluid is distributed in the longitudinal direction Ldm of the distributing member 20. The next step 103 of the method involves transferring the high temperature fluid to the elongated applicator chamber 17 through the plurality of distribution openings 24. And in the final step 105 the high temperature fluid is applied to the weeds W through the plurality of fluid discharge openings 18. As shown in Figs. 4 and 5, the method may include an additional step 104 between the transferring step 103 and the applying step 105. This additional step 104 involves changing the flow direction of the fluid between the moment the flow exits the distributing openings 24 and the moment the flow enters the fluid discharge openings 18. In fact, in step 104 the flow direction is almost reversed from upwardly directed under an angle of some 45° to directed straight down onto the weeds W.

Although the invention has been illustrated by reference to an exemplary embodiment thereof, it will be clear that it is not limited to this embodiment.

In fact, the weed killing device 3, which has been described as being handheld, could equally well be mounted on a frame that forms part of a vehicle or is towed thereby. To alleviate the workload of a user, the handheld device could be provided with support wheels mounted on the applicator chamber. The advantages of a more uniform distribution of the high temperature fluid are not limited to handheld devices. In fact, these advantages are actually more pronounced when the length of the applicator chamber - and thus the distance from the inlet to the outermost fluid discharge openings - becomes greater.

The number of distribution openings and the number of fluid discharge openings can be varied, as can be their spacing and their dimensions. In general, lower fluid flow rates require smaller openings and/or smaller numbers of openings in order to maintain sufficiently high pressures within the distributing member and the applicator chamber to ensure a uniform distribution. The shape of the various openings can also be adapted. And although both the distribution openings and the fluid discharge openings are shown to be equidistant in the illustrated embodiment, their spacing could also vary as a function of their distance to the inlet, so as to compensate for pressure losses as a result of drag. The same effect could be achieved by varying the size of the openings.

The position of the distribution openings in the distributing member could be varied as well. In the shown embodiment they are oriented towards an upper corner of the applicator chamber, but they could also be oriented vertically upward. The orientation should be selected such that the fluid exiting the distribution openings is always forced to flow around the distributing member to reach the fluid discharge openings.

Although the inlet has been shown to be connected to the distribution member at a central location and perpendicular to the longitudinal direction, it could also be arranged in-line with the distributing member and connected to one of the opposite ends of that member.

And finally, although in the illustrated embodiment a tubular distributing member is shown to be arranged in a square beam applicator chamber, these two parts could have identical or at least similar cross-sectional shapes. This may be useful for ease of manufacturing. The dispensing member could be a square beam as well, or the applicator chamber could be a tube. Other shapes are conceivable as well.

The scope of the invention is defined solely by the following claims.

## Claims

1. A device (3) for killing weeds (W) by application of a high temperature fluid (F) to the weeds (W), comprising an elongated applicator chamber (17) having a plurality of fluid discharge openings (18),
**characterized by** an elongated distributing member (20) arranged in the applicator chamber (17), wherein the distributing member (20) comprises at least one fluid inlet (21) and a plurality of distribution openings (24) in fluid communication with the applicator chamber (17).

2. The weed killing device (3) according to claim 1, wherein the distribution openings (24) are spaced apart in a longitudinal direction (Ldm) of the distributing member (20).

3. The weed killing device (3) according to claim 2, wherein the distribution openings (24) are substantially evenly spaced apart in the longitudinal direction (Ldm).

4. The weed killing device (3) according to any one of the preceding claims, wherein the distribution openings (24) are substantially aligned.

5. The weed killing device (3) according to any one of the preceding claims, wherein the fluid discharge openings (18) define a first fluid flow direction and the distribution openings (24) define a second fluid flow direction which is oriented at an angle to the first fluid flow direction; and optionally wherein the second fluid flow direction is substantially opposite to the first fluid flow direction.

6. The weed killing device (3) according to any one of the preceding claims, wherein the fluid discharge openings (18) are spaced apart in a longitudinal direction (Lac) of the applicator chamber (17); and optionally wherein the fluid discharge openings (18) are substantially evenly spaced apart in the longitudinal direction (Lac).

7. The weed killing device (3) according to any one of the preceding claims, wherein the fluid discharge openings (18) are substantially aligned.

8. The weed killing device (3) according to claims 2 and 6, wherein the longitudinal direction (Ldm) of the distributing member (20) and the longitudinal direction (Lac) of the applicator chamber (17) are substantially parallel.

9. The weed killing device (3) according to claim 8, wherein the distributing member (20) extends over substantially the entire length of the applicator chamber (17); and optionally wherein:
the distribution openings (24) are spaced further apart than the fluid discharge openings (18); and/or
the distribution openings (24) and the fluid discharge openings (18) have substantially the same dimensions (Ddm, Dac).

10. The weed killing device (3) according to any one of the preceding claims, wherein the distributing member (20) has an outer surface which is spaced apart from an inner wall of the applicator chamber (17).

11. The weed killing device (3) according to any one of the preceding claims, wherein the distributing member (20) has a smooth cross-sectional shape; and optionally wherein the distributing member (20) is tubular and has a substantially circular cross-section.

12. A method for killing weeds (W) by application of a high temperature fluid (F) to the weeds (W), comprising the steps of:
- supplying the high temperature fluid (F) to at least one inlet (21) of an elongated distributing member (20);
- distributing the high temperature fluid (F) in a longitudinal direction (Ldm) of the distributing member (20);
- transferring the high temperature fluid (F) to an elongated applicator chamber (17) through a plurality of distribution openings (24); and
- applying the high temperature fluid (F) to the weeds (W) through a plurality of fluid discharge openings (18).

13. The method according to claim 12, wherein a flow direction of the high temperature fluid (F) is changed between the step of transferring the high temperature fluid (F) and the step of applying the high temperature fluid (F).

14. The method according to claim 13, wherein the flow direction of the high temperature fluid (F) is substantially reversed between the step of transferring the high temperature fluid (F) and the step of applying the high temperature fluid (F).

15. The method according to claim 13 or 14, wherein between the step of transferring and the step of applying, the high temperature fluid (F) exiting the distribution openings (24) flows around the distributing member (20) to the fluid discharge openings (18); and optionally wherein the flow direction of the high temperature fluid (F) is oriented at an angle to the longitudinal direction (Ldm) of the distributing member (20).

## Patentansprüche

1. Vorrichtung (3) zur Unkrautbekämpfung (W) durch Anwendung einer Hochtemperaturflüssigkeit (F) auf das Unkraut (W), die eine längliche Applikatorkammer (17) mit mehreren Flüssigkeitsabgabeöffnungen (18) aufweist, **gekennzeichnet durch** ein längliches Verteilungselement (20), das in der Applikatorkammer (17) eingerichtet ist, wobei das Verteilungselement (20) wenigstens einen Flüssigkeitseinlass (21) und mehrere Verteilungsöffnungen (24) in einer Flüssigkeitsverbindung mit der Applikatorkammer (17) aufweist.

2. Vorrichtung (3) zur Unkrautbekämpfung nach Anspruch 1, wobei die Verteilungsöffnungen (24) in einer Längsrichtung (Ldm) des Verteilungselements (20) beabstandet sind.

3. Vorrichtung (3) zur Unkrautbekämpfung nach Anspruch 2, wobei die Verteilungsöffnungen (24) in der Längsrichtung (Ldm) im Wesentlichen gleichmäßig beabstandet sind.

4. Vorrichtung (3) zur Unkrautbekämpfung nach einem der vorhergehenden Ansprüche, wobei die Verteilungsöffnungen (24) im Wesentlichen ausgerichtet sind.

5. Vorrichtung (3) zur Unkrautbekämpfung nach einem der vorhergehenden Ansprüche, wobei die Flüssigkeitsabgabeöffnungen (18) eine erste Flüssigkeitsströmungsrichtung definieren und die Verteilungsöffnungen (24) eine zweite Flüssigkeitsströmungsrichtung, die in einem Winkel zu der ersten Flüssigkeitsströmungsrichtung orientiert ist, definieren; und wobei die zweite Flüssigkeitsströmungsrichtung optional im Wesentlichen entgegengesetzt zu der ersten Flüssigkeitsströmungsrichtung ist.

6. Vorrichtung (3) zur Unkrautbekämpfung nach einem der vorhergehenden Ansprüche, wobei die Flüssigkeitsabgabeöffnungen (18) in einer Längsrichtung (Lac) der Applikatorkammer (17) beabstandet sind; und wobei die Flüssigkeitsabgabeöffnungen (18) optional in der Längsrichtung (Lac) im Wesentlichen gleichmäßig beabstandet sind.

7. Vorrichtung (3) zur Unkrautbekämpfung nach einem der vorhergehenden Ansprüche, wobei die Flüssigkeitsabgabeöffnungen (18) im Wesentlichen ausgerichtet sind.

8. Vorrichtung (3) zur Unkrautbekämpfung nach den Ansprüchen 2 und 6, wobei die Längsrichtung (Ldm) des Verteilungselements (20) und die Längsrichtung (Lac) der Applikatorkammer (17) im Wesentlichen parallel sind.

9. Vorrichtung (3) zur Unkrautbekämpfung nach Anspruch 8, wobei das Verteilungselement (20) sich im Wesentlichen über die gesamte Länge der Applikatorkammer (17) erstreckt; und wobei optional:
die Verteilungsöffnungen (24) weiter als die Flüssigkeitsabgabeöffnungen (18) beabstandet sind; und/oder
die Verteilungsöffnungen (24) und die Flüssigkeitsabgabeöffnungen (18) im Wesentlichen die gleichen Abmessungen (Ddm, Dac) haben.

10. Vorrichtung (3) zur Unkrautbekämpfung nach einem der vorhergehenden Ansprüche, wobei das Verteilungselement (20) eine Außenoberfläche hat, die von einer Innenwand der Applikatorkammer (17) beabstandet ist.

11. Vorrichtung (3) zur Unkrautbekämpfung nach einem der vorhergehenden Ansprüche, wobei das Verteilungselement (20) eine gleichmäßige Querschnittform hat; und wobei das Verteilungselement (20) optional rohrförmig ist und einen im Wesentlichen kreisförmigen Querschnitt hat.

12. Verfahren zur Unkrautbekämpfung (W) durch Anwendung einer Hochtemperaturflüssigkeit (F) auf das Unkraut (W), das die folgenden Schritte aufweist:
- Zuführen der Hochtemperaturflüssigkeit (F) an wenigstens einen Einlass (21) eines länglichen Verteilungselements (20);
- Verteilen der Hochtemperaturflüssigkeit (F) in einer Längsrichtung (Ldm) des Verteilungselements (20);
- Überführen der Hochtemperaturflüssigkeit (F) durch mehrere Verteilungsöffnungen (24) an eine längliche Applikatorkammer (17); und
- Anwenden der Hochtemperaturflüssigkeit (F) durch mehrere Flüssigkeitsabgabeöffnungen (18) auf das Unkraut (W).

13. Verfahren nach Anspruch 12, wobei eine Strömungsrichtung der Hochtemperaturflüssigkeit (F) zwischen dem Schritt des Überführens der Hochtemperaturflüssigkeit (F) und dem Schritt des Anwendens der Hochtemperaturflüssigkeit (F) geändert wird.

14. Verfahren nach Anspruch 13, wobei die Strömungsrichtung der Hochtemperaturflüssigkeit (F) zwischen dem Schritt des Überführens der Hochtemperaturflüssigkeit (F) und dem Schritt des Anwendens der Hochtemperaturflüssigkeit (F) im Wesentlichen umgekehrt wird.

15. Verfahren nach Anspruch 13 oder 14, wobei die Hochtemperaturflüssigkeit (F), welche die Verteilungsöffnungen (24) verlässt, zwischen dem Schritt des Überführens und dem Schritt des Anwendens um das Verteilungselement (20) herum zu den Flüssigkeitsabgabeöffnungen (18) strömt; und wobei die Strömungsrichtung der Hochtemperaturflüssigkeit (F) optional in einem Winkel zu der Längsrichtung (Ldm) des Verteilungselements (20) orientiert ist.

## Revendications

1. Dispositif (3) d'élimination de mauvaises herbes (W) par application d'un fluide à haute température (F) sur les mauvaises herbes (W), comprenant un compartiment d'applicateur allongé (17) comportant une pluralité d'ouvertures de déchargement de fluide (18),
**caractérisé par** un élément de distribution allongé (20) agencé dans le compartiment d'applicateur (17), dans lequel l'élément de distribution (20) comprend au moins une entrée de fluide (21) et une pluralité d'ouvertures de distribution (24) en communication fluidique avec le compartiment d'applicateur (17).

2. Dispositif d'élimination de mauvaises herbes (3) selon la revendication 1, dans lequel les ouvertures de distribution (24) sont espacées l'une par rapport à l'autre dans une direction longitudinale (Ldm) de l'élément de distribution (20).

3. Dispositif d'élimination de mauvaises herbes (3) selon la revendication 2, dans lequel les ouvertures de distribution (24) sont espacées sensiblement régulièrement l'une par rapport à l'autre dans la direction longitudinale (Ldm).

4. Dispositif d'élimination de mauvaises herbes (3) selon l'une quelconque des revendications précédentes, dans lequel les ouvertures de distribution (24) sont sensiblement alignées.

5. Dispositif d'élimination de mauvaises herbes (3) selon l'une quelconque des revendications précédentes, dans lequel les ouvertures de déchargement de fluide (18) définissent une première direction d'écoulement de fluide et les ouvertures de distribution (24) définissent une seconde direction d'écoulement de fluide qui est orientée sous un certain angle par rapport à la première direction d'écoulement de fluide; et dans lequel, en variante, la seconde direction d'écoulement de fluide est sensiblement opposée à la première direction d'écoulement de fluide.

6. Dispositif d'élimination de mauvaises herbes (3) selon l'une quelconque des revendications précédentes, dans lequel les ouvertures de déchargement de fluide (18) sont espacées l'une par rapport à l'autre dans une direction longitudinale (Lac) du compartiment d'applicateur (17) ; et dans lequel, en variante, les ouvertures de déchargement de fluide (18) sont espacées sensiblement régulièrement l'une par rapport à l'autre dans la direction longitudinale (Lac).

7. Dispositif d'élimination de mauvaises herbes (3) selon l'une quelconque des revendications précédentes, dans lequel les ouvertures de déchargement de fluide (18) sont sensiblement alignées.

8. Dispositif d'élimination de mauvaises herbes (3) selon les revendications 2 et 6, dans lequel la direction longitudinale (Ldm) de l'élément de distribution (20) et la direction longitudinale (Lac) du compartiment d'applicateur (17) sont sensiblement parallèles.

9. Dispositif d'élimination de mauvaises herbes (3) selon la revendication 8, dans lequel l'élément de distribution (20) s'étend sensiblement sur la totalité de la longueur du compartiment d'applicateur (17) ; et dans lequel, en variante :
les ouvertures de distribution (24) sont espacées davantage l'une par rapport à l'autre que les ouvertures de déchargement de fluide (18) ; et/ou
les ouvertures de distribution (24) et les ouvertures de déchargement de fluide (18) présentent sensiblement les mêmes dimensions (Ddm, Dac).

10. Dispositif d'élimination de mauvaises herbes (3) selon l'une quelconque des revendications précédentes, dans lequel l'élément de distribution (20) présente une surface externe qui est espacée par rapport à une paroi interne du compartiment d'applicateur (17).

11. Dispositif d'élimination de mauvaises herbes (3) selon l'une quelconque des revendications précédentes, dans lequel l'élément de distribution (20) présente une forme régulière en coupe transversale ; et dans lequel, en variante, l'élément de distribution (20) est tubulaire et présente une section transversale sensiblement circulaire.

12. Procédé d'élimination de mauvaises herbes (W) par application d'un fluide à haute température (F) sur les mauvaises herbes (W), comprenant les étapes de :
fourniture du fluide à haute température (F) à au moins une entrée (21) d'un élément de distribution allongé (20) ;
distribution du fluide à haute température (F) dans une direction longitudinale (Ldm) de l'élément de distribution (20) ;
transfert du fluide à haute température (F) vers un compartiment d'applicateur allongé (17) à travers une pluralité d'ouvertures de distribution (24) ; et
application du fluide à haute température (F) sur les mauvaises herbes (W) par une pluralité d'ouvertures de déchargement de fluide (18).

13. Procédé selon la revendication 12, dans lequel une direction d'écoulement du fluide à haute température (F) est modifiée entre l'étape de transfert du fluide à haute température (F) et l'étape d'application du fluide à haute température (F).

14. Procédé selon la revendication 13, dans lequel la direction d'écoulement du fluide à haute température (F) est sensiblement inversée entre l'étape de transfert du fluide à haute température (F) et l'étape d'application du fluide à haute température (F).

15. Procédé selon la revendication 13 ou 14, dans lequel, entre l'étape de transfert et l'étape d'application, le fluide à haute température (F) sortant par les ouvertures de distribution (24) s'écoule autour de l'élément de distribution (20) vers les ouvertures de déchargement de fluide (18) ; et dans lequel, en variante, la direction d'écoulement du fluide à haute température (F) est orientée sous un certain angle par rapport à la direction longitudinale (Ldm) de l'élément de distribution (20).
